# EUROPÄISCHE PATENTSCHRIFT

(11) **EP 3 890 932 B1**
(45) Veröffentlichungstag und Bekanntmachung des Hinweises auf die Patenterteilung: **17.04.2024**
(21) Anmeldenummer: 19820684.9
(22) Anmeldetag: 05.12.2019
(51) Int. Cl.: B27D 5/00, B65G 1/06

(54) **BEREITSTELLUNGSSYSTEM, VERFAHREN ZUM BESTÜCKEN EINER ZUFUHRVORRICHTUNG MIT EINEM BESCHICHTUNGSMATERIAL UND VERWENDUG**
SUPPLY SYSTEM, METHOD TO EQUIP A SUPPLY DEVICE WITH A COATING MATERIAL AND USE
SYSTEME D'APPROVISIONNEMENT, METHODE POUR EQUIPER UN SYSTEME D'APPROVISIONEMENT ET UTILISATION

(30) Priorität: 07.12.2018 DE 102018131368
(43) Veröffentlichungstag der Anmeldung: 13.10.2021
(73) Patentinhaber: HOMAG GmbH, 72296 Schopfloch (DE)
(72) Erfinder: GÖTZ, Reiner, 72160 Horb-Diessen (DE); SCHMID, Johannes, 72181 Starzach (DE)
(74) Vertreter: Hoffmann Eitle
(86) Internationale Anmeldenummer: PCT/EP2019/083807
(87) Internationale Veröffentlichungsnummer: WO 2020/115203

(56) Entgegenhaltungen:
- EP-A1- 3 479 976
- DE-A1-102021 125 133
- DE-B3-102020 202 406
- DE-U1- 20 204 285
- US-A1- 2004 041 056
- US-A1- 2020 198 076

## Beschreibung

Die vorliegende Erfindung betrifft ein Bereitstellungssystem gemäß dem Oberbegriff des Anspruchs 1, und ein Verfahren zum Bestücken einer Zufuhrvorrichtung mit einem Beschichtungsmaterial gemäß dem Oberbegriff des Anspruchs 6 und eine Verwendung eines Manipulators zur Umsetzung eines Beschichtungsmaterials gemäß dem Oberbegriff des Anspruchs 8. Ein solches System, ein solches Verfahren und eine solche Verwendung sind aus dem Dokument US 2004/041056 A1 bekannt.

### Stand der Technik

Es hat sich bewährt, Schnittflächen von plattenförmigen Werkstücken, sogenannte Werkstückschmalflächen, mit einem etwa streifenförmigen Beschichtungsmaterial zu beschichten. Zum einen kann so die Schmalfläche an die Eigenschaften der Werkstückoberfläche des Werkstücks angepasst werden ohne ein aufwändiges Nacharbeiten erforderlich zu machen. Zum anderen ist es durch eine derartige Beschichtung möglich, den Kern des Werkstücks mit einem anderen beispielsweise kostengünstigeren Material auszuführen als die nach außen sichtbaren Oberflächen. Diese Beschichtung findet üblicherweise an einer Bearbeitungsmaschine statt.

Um das Werkstück mit dem Beschichtungsmaterial zu verbinden, wird ein Haftmittel bzw. ein Klebstoff eingesetzt. Hierbei wird insbesondere ein Haftmittel verwendet, welches durch einen Energieeintrag aktiviert wird und erst dann eine belastbare Verbindung zwischen zwei Komponenten (Beschichtungsmaterial und Werkstück) herstellen kann.

Bearbeitungsmaschinen sind üblicherweise mit verschiedenen Werkstücken, also mit Werkstücken verschiedener Größen und/oder Materialien verwendbar. Diese verschiedenen Werkstücke erfordern jedoch üblicherweise auch verschiedene Beschichtungsmaterialien.

Es ist deswegen bekannt, Zufuhrvorrichtungen an Bearbeitungsmaschinen vorzusehen, die einer Bearbeitungsmaschine verschiedene Beschichtungsmaterialien zuführen kann. Eine derartige Zufuhrvorrichtung wird in der DE 10 2009 021 676 A1 offenbart.

Derartige Zufuhrvorrichtungen können jedoch aus Platz-und Komplexitätsgründen nur eine begrenzte Anzahl an Beschichtungsmaterialien aufnehmen.

Darüber hinaus sind Bereitstellungsysteme aus der EP 3 479 976 A1, der US 2004 041 056 A1 und der DE 202 04 285 U1 bekannt.

### Darstellung der Erfindung

Aus dem oben Erläuterten ergab sich als Aufgabe der vorliegenden Erfindung, eine Lösung bereitzustellen, das in der Lage ist, um eine große Anzahl an Beschichtungsmaterialien einer Bearbeitungsmaschine bereitzustellen, ohne dabei die Beschränkungen bezüglich Platz und Komplexität zu verletzen.

Als Lösung stellt die vorliegende Erfindung das Bereitstellungssystem des Anspruchs 1 bereit.

Der Erfindung lag dabei die Erkenntnis zugrunde, dass die oben genannten Probleme vor allem darin begründet liegen, dass an einer Bearbeitungsmaschine wenig Platz für das Vorsehen von Beschichtungsmaterialien vorhanden ist, so dass der vorhandene Platz nur mittels einer steigenden Komplexität noch besser ausgenutzt werden kann.

In Anbetracht dieser Erkenntnisse stellt die vorliegende Erfindung ein Bereitstellungssystem zum Bereitstellen eines Beschichtungsmaterials zu einer Zufuhrvorrichtung zum Zuführen eines Beschichtungsmaterials zu einer Bearbeitungsmaschine bereit, das eine Lagervorrichtung und einen Manipulator aufweist. Die Zufuhrvorrichtung dient dabei zum Zuführen eines Beschichtungsmaterials zu einer Bearbeitungsmaschine, wobei die Zufuhrvorrichtung ausgestaltet ist, mindestens ein Beschichtungsmaterial, das der Bearbeitungsmaschine zugeführt werden kann, aufzunehmen. Die Lagervorrichtung ist ausgestaltet, mindestens ein Beschichtungsmaterial zu lagern, und der Manipulator ist ausgestaltet, Beschichtungsmaterial zwischen der Zufuhrvorrichtung und der Lagervorrichtung umzusetzen.

Erfindungsgemäß ist der Manipulator ein mobiler Roboter und insbesondere ein autonomer mobiler Roboter, der ausgestaltet ist, Beschichtungsmaterialien an einer Lagervorrichtung aufzunehmen, zu einer Zufuhrvorrichtung zu transportieren, und an der Zufuhrvorrichtung abzuladen und/oder Beschichtungsmaterialien an einer Zufuhrvorrichtung aufzunehmen, zu einer Lagervorrichtung zu transportieren, und an der Lagervorrichtung abzuladen.

Somit wird es ermöglicht, eine beliebige Anzahl an Beschichtungsmaterialien einer Bearbeitungsmaschine bereitzustellen, ohne dass diese an der Bearbeitungsmaschine gelagert sein müssen.

Dabei ist die Lagervorrichtung bevorzugt ausgestaltet, eine Vielzahl an Beschichtungsmaterialien aufzunehmen und diese der Zufuhrvorrichtung nach Bedarf mittels des Manipulators bereitzustellen.

Der Manipulator ist bevorzugt ein Gelenkarmroboter und insbesondere ein Mehrachsroboter und weiter bevorzugt ein 5-Achs- oder 6-Achs-Roboter.

Alternativ, jedoch nicht durch die beanspruchte Erfindung abgedeckt, kann der Manipulator ein Lineartisch und die Lagervorrichtung ausgestaltet sein, eine Bewegung eines gelagerten Beschichtungsmaterials in zumindest einer Achse zu ermöglichen.

Weiter alternativ ist der Manipulator bevorzugt ein Gelenkarmroboter und die Lagervorrichtung ist ausgestaltet, Beschichtungsmaterialien in zumindest einer Ebene zu lagern, so dass Beschichtungsmaterialien in verschiedenen Lagerpositionen der Lagervorrichtung von dem Manipulator erreicht werden können, wobei optional die Beschichtungsmaterialien in der zumindest einen Ebene der Lagervorrichtung bewegt werden können.

Die vorliegende Erfindung stellt weiterhin ein Zufuhrsystem bereit, Zufuhrsystem, das aufweist: ein Bereitstellungssystem wie im vorigen dargestellt, eine Zufuhrvorrichtung zum Zuführen eines Beschichtungsmaterials zu einer Bearbeitungsmaschine, wobei die Zufuhrvorrichtung ausgestaltet ist, mindestens ein Beschichtungsmaterial (1, 1b), dass der Bearbeitungsmaschine zugeführt werden kann, aufzunehmen.

Weiterhin stellt die vorliegende Erfindung ein Verfahren gemäß Anspruch 6 zum Bestücken einer Zufuhrvorrichtung mit einem Beschichtungsmaterials bereit. Unter anderem weist das Verfahren die folgenden Schritte auf: Auswählen eines Beschichtungsmaterials aus einer Lagervorrichtung und Umsetzen des ausgewählten Beschichtungsmaterials zwischen der Lagervorrichtung und der Zufuhrvorrichtung.

Das Umsetzen geschieht dabei mittels eines Manipulators.

Weiter bevorzugt wird das Verfahren unter Benutzung eines Zufuhrsystems wie oben dargestellt durchgeführt.

Weiterhin stellt die vorliegende Erfindung gemäß Anspruch 8 die Verwendung eines Manipulators zur Umsetzung eines Beschichtungsmaterials von einer Lagervorrichtung zu einer Zufuhrvorrichtung bereit.

Dies geschieht bevorzugt mittels des im vorigen definierten Verfahrens und/oder mittels des im vorigen definierten Bereitstellungssystems bereit.

Die vorliegende Erfindung stellt ferner eine Bearbeitungsvorrichtung bereit, die aufweist: eine Bearbeitungsmaschine zum Beschichten eines Werkstücks mit einem Beschichtungsmaterial und ein Zufuhrsystem wie im vorigen definiert.

### Kurze Beschreibung der Zeichnungen

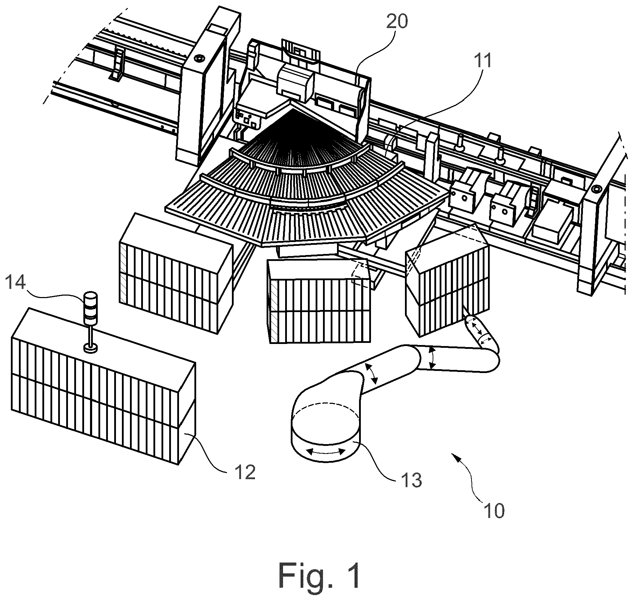

Fig. 1 zeigt eine bevorzugte Ausführungsform eines erfindungsgemäßen Zufuhrsystems an einer Bearbeitungsmaschine.

### Bevorzugte Ausführungsformen der vorliegenden Erfindung

Fig. 1 zeigt eine bevorzugte erste Ausführungsform eines erfindungsgemäßen Bereitstellungssystems.

Dabei ist das Bereitstellungsystem 10 an einer Bearbeitungsmaschine 20 vorgesehen. Die Bearbeitungsmaschine 20 ist in der dargestellten bevorzugten Ausführungsform eine Kantenverleimungsvorrichtung im Durchlaufbetrieb, die Kanten von Werkstücken mit einem Beschichtungsmaterial verbinden kann. Dies geschieht mittels eines Energieeintrags in das Beschichtungsmaterial, etwa unter Benutzung von Heißluft oder einem Laser. Nach diesem Energieeintrag wird das Beschichtungsmaterial an dem Werkstück angepresst und somit fest verbunden. Auch weitere und/oder andere Bearbeitungsschritte sind an der Bearbeitungsmaschine 20 möglich. Weiterhin kann die Bearbeitungsmaschine 20 vor und/oder nach weiteren Bearbeitungsmaschinen angeordnet, die weitere Bearbeitungsschritte an Werkstücken durchführen, um somit aus Werkstücken gewünschte Produkte zu erhalten.

Das Bereitstellungssystem 10 ist an der Position der Bearbeitungsmaschine 20 angeordnet, an der das Beschichtungsmaterial auf Werkstücke aufgebracht werden soll. An der Bearbeitungsmaschine 20 ist eine Zufuhrvorrichtung 11 angeordnet. Die Zufuhrvorrichtung 11 ist dabei in der Lage, eine Mehrzahl von Beschichtungsmaterialien 1a und 1b aufzunehmen. Diese sind etwa aufgerollt angeordnet und können nach Bedarf entrollt werden. In der Zufuhrvorrichtung 11 ist Platz für eine beschränkte Anzahl an Beschichtungsmaterialien, etwa für 24 Beschichtungsmaterialien. Üblicherweise werden hier verschiedene Beschichtungsmaterialien vorgesehen, die von der Bearbeitungsmaschine 20 nachfolgend gebraucht werden.

Die Beschichtungsmaterialien 1a, 1b der Zufuhrvorrichtung 11 können von dem Manipulator 13 ausgetauscht bzw. ersetzt werden. Dies kann insbesondere dann geschehen, wenn eine Steuerungseinrichtung (nicht dargestellt) meldet, dass ein anderes Beschichtungsmaterial als die in der Zufuhrvorrichtung 11 angeordneten Beschichtungsmaterialien 1a, 1b benötigt wird. In diesem Fall manipuliert der Manipulator 13 das benötigte Beschichtungsmaterial, in dem dessen Lage von einer Lagervorrichtung 12 zu der Zufuhrvorrichtung 12 verändert wird.

In der vorliegenden Ausführungsform ist der Manipulator 13 als 6-Achs-Roboter ausgestaltet, wie dargestellt in Fig. 1. Der 6-Achs-Roboter hat an dessen Spitze einen Greifarm (nicht dargestellt), der ausgestaltet ist, ein neues Beschichtungsmaterial zu greifen und anschließend dessen Lage zu verändern. Zum Anschluss eines Manipulationsvorgangs kann der Greifarm das Beschichtungsmaterial wieder loslassen und in eine neutrale Position verfahren. Alternativ ist hier auch ein 5-Achs-Roboter oder allgemein ein Mehrachsroboter als Manipulator 13 möglich.

Mögliche Bewegungsrichtungen des Manipulators 13 sind in Fig. 1 mittels Pfeilen gekennzeichnet.

Somit kann nach Bedarf die Zufuhrvorrichtung mit verschiedenen Beschichtungsmaterialien bestückt werden.

Die Lagervorrichtung 12 ist in der vorliegenden Ausführungsform als Regalsystem ausgestaltet. In jedem Fach kann dabei ein Beschichtungsmaterial vorgesehen sein, entweder als Ersatz für aufgebrauchte Beschichtungsmaterialien durch die Bearbeitungsmaschine oder als Beschichtungsmaterialien mit anderer Beschaffenheit als die Beschichtungsmaterialien, die in der Zufuhrvorrichtung angeordnet sind.

Ferner kann die Lagervorrichtung 12 eine Meldeeinrichtung 14 aufweisen, die ausgestaltet ist, melden zu können, dass hier die Aufmerksamkeit eines Bedieners notwendig ist. Dies ist der Fall etwa bei aufgebrauchtem Beschichtungsmaterial und/oder bei technischen Fehlfunktionen. Das Melden kann mittels einer optischen und/oder akustischen Warnung geschehen.

Zusammen bilden die die Lagervorrichtung 12 und der Manipulator 13 ein Bereitstellungssystem 10 an der Zufuhrvorrichtung 11 aus.

Der Manipulator 13 ist weiterhin erfindungsgemäß in der Lage, ein Beschichtungsmaterial, das zu der Zufuhrvorrichtung 11 bewegt wurde, derart zu manipulieren, dass es anschließend von der Bearbeitungsmaschine 20 verwendet werden kann. Dieses Manipulieren bedeutet insbesondere einen Einfädelungsvorgang durchzuführen, so dass dies nicht mehr händisch geschehen muss.

In einer zweiten, nicht dargestellten Ausführungsform, die jedoch nicht durch die beanspruchte Erfindung abgedeckt ist, ist der Manipulator als Lineartisch ausgebildet. Dieser Lineartisch ermöglicht eine lineare Bewegung eines Schlittens, auf dem ein zu verfahrenes Beschichtungsmaterial angeordnet sein kann. Um zu verhindern, dass auf diese Art lediglich ein Platz in der Lagervorrichtung angefahren werden kann, ist die Lagervorrichtung in dieser zweiten Ausführungsform ausgestaltet, einzelne Lagerplätze zu verfahren, so dass verschiedene Lagerplätze zu dem Lineartisch angeordnet sein können, in anderen Worten also so angeordnet sind, dass ein darin angeordnetes Kantenmaterial von dem Lineartisch verfahren werden kann.

Eine dritte, nicht dargestellte Ausführungsform, die jedoch nicht durch die beanspruchte Erfindung abgedeckt ist, ist im Wesentlichen wie die oben dargestellte zweite Ausführungsform, weist jedoch als Manipulator einen Kreuztisch auf. Der Kreuztisch ist in der Lage in zwei Ebenen zu verfahren und nicht wie ein Lineartisch in nur einer Ebene. Somit kann es der Lagervorrichtung ermöglicht werden, dass diese keine eigene Bewegbarkeit zum Erreichen von verschiedenen Beschichtungsmaterialien aufweisen muss.

Erfindungsgemäß ist der Manipulator ein mobil fahrbarer Roboter, der autonom steuerbar ist. Eine derartige Ausführungsform ist insbesondere dann vorteilhaft, wenn zwischen Lagervorrichtung und Zufuhrvorrichtung 11 eine größere räumliche Distanz vorhanden ist. Der autonome Roboter kann beispielsweise in einer Zentrale gesteuert werden oder von einer Zentrale Befehle bekommen, auf Grundlage dessen der Roboter Beschichtungsmaterialien zwischen der Lagervorrichtung 12 und der Zufuhrvorrichtung 11 bewegt.

### Bezugszeichen

- 1a, 1b: Beschichtungsmaterial
- 10: Bereitstellungssystem
- 11: Zufuhrvorrichtung
- 12: Lagervorrichtung
- 13: Manipulator
- 14: Meldeeinrichtung
- 20: Bearbeitungsmaschine

## Patentansprüche

1. Bereitstellungsystem (10) zum Bereitstellen eines Beschichtungsmaterials (1a, 1b) zu einer Zufuhrvorrichtung (11) zum Zuführen des Beschichtungsmaterials (1a, 1b) zu einer Bearbeitungsmaschine (20), wobei das Bereitstellungssystem (10) aufweist:
eine Lagervorrichtung (12), die ausgestaltet ist, mindestens ein Beschichtungsmaterial (1a, 1b) zu lagern, und
einen Manipulator (13), der ausgestaltet ist, Beschichtungsmaterial (1a, 1b) zwischen der Zufuhrvorrichtung (11) und der Lagervorrichtung (12) umzusetzen, **dadurch gekennzeichnet daß**
der Manipulator (13) ein mobil fahrbarer Roboter, insbesondere ein autonomer mobiler Roboter ist, der ausgestaltet ist,
die Beschichtungsmaterialien (1a, 1b) an der Lagervorrichtung (12) aufzunehmen, zu der Zufuhrvorrichtung (11) zu transportieren, und an der Zufuhrvorrichtung (11) abzuladen
und/oder
die Beschichtungsmaterialien (1a, 1b) an der Zufuhrvorrichtung (11) aufzunehmen, zu der Lagervorrichtung (12) zu transportieren, und an der Lagervorrichtung (12) abzuladen, und wobei
der Manipulator (13) ausgestaltet ist, einen Einfädelungsvorgang an dem Beschichtungsmaterial (1, 1b) durchzuführen, wenn dieses zu der Zufuhrvorrichtung (11) bewegt wurde.

2. Bereitstellungssystem (10) nach Anspruch 1, wobei
die Lagervorrichtung (12) ausgestaltet ist, eine Vielzahl an Beschichtungsmaterialien (1a, 1b) aufzunehmen und diese der Zufuhrvorrichtung (11) nach Bedarf mittels des Manipulators (13) bereitzustellen.

3. Bereitstellungssystem (10) nach Anspruch 1 oder 2, wobei
der Manipulator (13) ein Gelenkarmroboter ist und bevorzugt Mehrachsroboter und weiter bevorzugt ein 5-Achs-oder 6-Achs-Roboter ist.

4. Bereitstellungssystem (10) nach einem der Ansprüche 1 bis 3, wobei
der Manipulator (13) ein Gelenkarmroboter ist und
die Lagervorrichtung (12) ausgestaltet ist, Beschichtungsmaterialien (1a, 1b) in zumindest einer Ebene zu lagern,
so dass
Beschichtungsmaterialien (1a, 1b) in verschiedenen Lagerpositionen der Lagervorrichtung (12) von dem Manipulator (13) erreicht werden können,
wobei optional die Beschichtungsmaterialien (1a, 1b) in der zumindest einen Ebene der Lagervorrichtung (12) bewegt werden können.

5. Zufuhrsystem, das aufweist:
ein Bereitstellungssystem nach einem der Ansprüche 1 bis 4,
eine Zufuhrvorrichtung (11) zum Zuführen eines Beschichtungsmaterials (1a, 1b) zu einer Bearbeitungsmaschine (20), wobei die Zufuhrvorrichtung (11) ausgestaltet ist, mindestens ein Beschichtungsmaterial (1a, 1b), das der Bearbeitungsmaschine (20) zugeführt werden kann, aufzunehmen.

6. Verfahren zum Bestücken einer Zufuhrvorrichtung (11) mit einem Beschichtungsmaterial (1a, 1b), das die folgenden Schritte aufweist:
Auswählen des Beschichtungsmaterials (1a, 1b) aus einer Lagervorrichtung (12), und
Umsetzen des ausgewählten Beschichtungsmaterials (1a, 1b) zwischen der Lagervorrichtung (12) und der Zufuhrvorrichtung (11), **dadurch gekennzeichnet dass**, das Umsetzen mittels eines Manipulators (13) geschieht und wobei
der Manipulator (13) ein mobil fahrbarer Roboter, insbesondere ein autonomer mobiler Roboter ist, der ausgestaltet ist,
die Beschichtungsmaterialien (1a, 1b) an der Lagervorrichtung (12) aufzunehmen, zu der Zufuhrvorrichtung (11) zu transportieren, und an der Zufuhrvorrichtung (11) abzuladen
und/oder
die Beschichtungsmaterialien (1a, 1b) an der Zufuhrvorrichtung (11) aufzunehmen, zu der Lagervorrichtung (12) zu transportieren, und an der Lagervorrichtung (12) abzuladen, und wobei
der Manipulator (13) ausgestaltet ist, einen Einfädelungsvorgang an dem Beschichtungsmaterial (1, 1b) durchzuführen, wenn dieses zu der Zufuhrvorrichtung (11) bewegt wurde.

7. Verfahren nach Anspruch 6, wobei
das Verfahren unter Benutzung eines Bereitstellungssystems (10) nach einem der Ansprüche 1 bis 4 durchgeführt wird.

8. Verwendung eines Manipulators (13) zur Umsetzung eines Beschichtungsmaterials (1a, 1b) von einer Lagervorrichtung (12) zu einer Zufuhrvorrichtung (11), **dadurch gekennzeichnet, daß**
der Manipulator (13) ein mobil fahrbarer Roboter, insbesondere ein autonomer Roboter ist, der ausgestaltet ist,
die Beschichtungsmaterialien (1a, 1b) an der Lagervorrichtung (12) aufzunehmen, zu der Zufuhrvorrichtung (11) zu transportieren, und an der Zufuhrvorrichtung (11) abzuladen
und/oder
die Beschichtungsmaterialien (1a, 1b) an der Zufuhrvorrichtung (11) aufzunehmen, zu der Lagervorrichtung (12) zu transportieren, und an der Lagervorrichtung (12) abzuladen und wobei
der Manipulator (13) ausgestaltet ist, einen Einfädelungsvorgang an dem Beschichtungsmaterial (1, 1b) durchzuführen, wenn dieses zu der Zufuhrvorrichtung (11) bewegt wurde.

9. Bearbeitungsvorrichtung, die aufweist:
eine Bearbeitungsmaschine (20) zum Beschichten eines Werkstücks mit einem Beschichtungsmaterial, und
ein Zufuhrsystem nach Anspruch 5.

## Claims

1. Supply system (10) for supplying a coating material (1a, 1b) to a feed device (11) for feeding the coating material (1a, 1b) to a processing machine (20), wherein the supply system (10) has:
a storage device (12) which is designed to store at least one coating material (1a, 1b), and
a manipulator (13) which is designed to transfer coating material (1a, 1b) between the feed device (11) and the storage device (12), **characterised in that**
the manipulator (13) is a mobile driveable robot, in particular an autonomous mobile robot, which is designed
to pick up the coating materials (1a, 1b) at the storage device (12), transport them to the feed device (11) and unload them at the feed device (11)
and/or
to pick up the coating materials (1a, 1b) at the feed device (11), transport them to the storage device (12) and unload them at the storage device (12), and wherein
the manipulator (13) is designed to perform a threading operation on the coating material (1, 1b) when this has been moved to the feed device (11).

2. Supply system (10) according to claim 1, wherein the storage device (12) is designed to pick up a plurality of coating materials (1a, 1b) and supply these to the feed device (11) as required by means of the manipulator (13).

3. Supply system (10) according to claim 1 or 2, wherein
the manipulator (13) is an articulated arm robot and is preferably a multi-axis robot and more preferably a 5-axis or 6-axis robot.

4. Supply system (10) according to one of the claims 1 to 3, wherein
the manipulator (13) is an articulated arm robot and the storage device (12) is designed to store coating materials (1a, 1b) on at least one level,
so that
coating materials (1a, 1b) in different storage positions of the storage device (12) can be reached by the manipulator (13),
wherein, optionally, the coating materials (1a, 1b) can be moved within the at least one level of the storage device (12).

5. Feed system, having:
a supply system according to one of the claims 1 to 4,
a feed device (11) for feeding a coating material (1a, 1b) to a processing machine (20), wherein the feed device (11) is designed to pick up at least one coating material (1a, 1b) which can be fed to the processing machine (20).

6. Method for equipping a feed device (11) with a coating material (1a, 1b), having the following steps:
selecting the coating material (1a, 1b) from a storage device (12), and
transferring the selected coating material (1a, 1b) between the storage device (12) and the feed device (11), **characterised in that** the transfer is carried out by means of a manipulator (13), and wherein
the manipulator (13) is a mobile driveable robot, in particular an autonomous mobile robot, which is designed to
pick up the coating materials (1a, 1b) at the storage device (12), transport them to the feed device (11) and unload them at the feed device (11)
and/or
to pick up the coating materials (1a, 1b) at the feed device (11), transport them to the storage device (12) and unload them at the storage device (12), and wherein
the manipulator (13) is designed to perform a threading operation on the coating material (1, 1b) when it has been moved to the feed device (11).

7. Method according to claim 6, wherein
the method is carried out using a supply system (10) according to one of the claims 1 to 4.

8. Use of a manipulator (13) to transfer a coating material (1a, 1b) from a storage device (12) to a feed device (11), **characterised in that**
the manipulator (13) is a mobile driveable robot, in particular an autonomous robot, which is designed
to pick up the coating materials (1a, 1b) at the storage device (12), transport them to the feed device (11) and unload them at the feed device (11)
and/or
to pick up the coating materials (1a, 1b) at the feed device (11), transport them to the storage device (12) and unload them at the storage device (12), and wherein
the manipulator (13) is designed to perform a threading operation on the coating material (1a, 1b) when it has been moved to the feed device (11).

9. Machining device, having:
a processing machine (20) for coating a workpiece with a coating material, and
a feed system according to claim 5.

## Revendications

1. Système de fourniture (10) destiné à la fourniture d'un matériau de revêtement (1a, 1b) à un dispositif d'acheminement (11) destiné à l'acheminement du matériau de revêtement (1a, 1b) à une machine de traitement (20), dans lequel le système de fourniture (10) présente :
un dispositif de stockage (12), qui est conçu pour stocker au moins un matériau de revêtement (1a, 1b) et
un manipulateur (13), qui est conçu pour transférer le matériau de revêtement (1a, 1b) entre le dispositif d'acheminement (11) et le dispositif de stockage (12), **caractérisé en ce que**
le manipulateur (13) est un robot à déplacement mobile, en particulier un robot mobile autonome, qui est conçu
pour recevoir les matériaux de revêtement (1a, 1b) au niveau du dispositif de stockage (12), les transporter vers le dispositif d'acheminement (11) et les décharger au niveau du dispositif d'acheminement (11),
et/ou
pour recevoir les matériaux de revêtement (1a, 1b) au niveau du dispositif d'acheminement (11), les transporter vers le dispositif de stockage (12) et les décharger au niveau du dispositif de stockage (12), et dans lequel
le manipulateur (13) est conçu pour réaliser un processus d'enfilage sur le matériau de revêtement (1, 1b) lorsqu'il a été déplacé vers le dispositif d'acheminement (11).

2. Système de fourniture (10) selon la revendication 1, dans lequel
le dispositif de stockage (12) est conçu pour recevoir une pluralité de matériaux de revêtement (1a, 1b) et les fournir au dispositif d'acheminement (11) selon les besoins au moyen du manipulateur (13).

3. Système de fourniture (10) selon la revendication 1 ou la revendication 2, dans lequel
le manipulateur (13) est un robot à bras articulé et, de préférence, un robot à plusieurs axes et, de préférence encore, un robot à 5 axes ou à 6 axes.

4. Système de fourniture (10) selon l'une des revendications 1 à 3, dans lequel le manipulateur (13) est un robot à bras articulé et
le dispositif de stockage (12) est conçu pour stocker les matériaux de revêtement (1a, 1b) dans au moins un plan,
de sorte que
les matériaux de revêtement (1a, 1b) puissent être atteints, dans plusieurs positions de stockage du dispositif de stockage (12), par le manipulateur (13),
dans lequel facultativement les matériaux de revêtement (1a, 1b) peuvent être déplacés dans l'au moins un plan du dispositif de stockage (12).

5. Système d'acheminement, qui présente :
un système de fourniture selon l'une quelconque des revendications 1 à 4,
un dispositif d'acheminement (11) destiné à l'acheminement d'un matériau de revêtement (1a, 1b) à une machine de traitement (20), dans lequel le dispositif d'acheminement (11) est conçu pour recevoir au moins un matériau de revêtement (1a, 1b), qui peut être acheminé à la machine de traitement (20).

6. Procédé permettant de charger un dispositif d'acheminement (11) avec un matériau de revêtement (1a, 1b), qui présente les étapes suivantes :
sélection du matériau de revêtement (1a, 1b) à partir d'un dispositif de stockage (12) et
déplacement du matériau de revêtement (1a, 1b) sélectionné entre le dispositif de stockage (12) et le dispositif d'acheminement (11), **caractérisé en ce que** le déplacement est effectué au moyen d'un manipulateur (13) et dans lequel
le manipulateur (13) est un robot à déplacement mobile, en particulier un robot mobile autonome, qui est conçu
pour recevoir les matériaux de revêtement (1a, 1b) au niveau du dispositif de stockage (12), les transporter vers le dispositif d'acheminement (11) et les décharger au niveau du dispositif d'acheminement (11),
et/ou
pour recevoir les matériaux de revêtement (1a, 1b) au niveau du dispositif d'acheminement (11), les transporter vers le dispositif de stockage (12) et les décharger au niveau du dispositif de stockage (12), et dans lequel
le manipulateur (13) est conçu pour réaliser un processus d'enfilage sur le matériau de revêtement (1, 1b) lorsqu'il a été déplacé vers le dispositif d'acheminement (11).

7. Procédé selon la revendication 6, dans lequel
le procédé est réalisé en utilisant un système de fourniture (10) selon l'une quelconque des revendications 1 à 4.

8. Utilisation d'un manipulateur (13) pour le déplacement d'un matériau de revêtement (1a, 1b) d'un dispositif de stockage (12) vers un dispositif d'acheminement (11), **caractérisé en ce que**
le manipulateur (13) est un robot à déplacement mobile, en particulier un robot autonome, qui est conçu
pour recevoir les matériaux de revêtement (1a, 1b) au niveau du dispositif de stockage (12), les transporter vers le dispositif d'acheminement (11) et les décharger au niveau du dispositif d'acheminement (11),
et/ou
pour recevoir les matériaux de revêtement (1a, 1b) au niveau du dispositif d'acheminement (11), les transporter vers le dispositif de stockage (12) et les décharger au niveau du dispositif de stockage (12) et dans lequel
le manipulateur (13) est conçu pour réaliser un processus d'enfilage sur le matériau de revêtement (1, 1b) lorsqu'il a été déplacé vers le dispositif d'acheminement (11).

9. Dispositif de traitement, qui présente :
une machine de traitement (20) destinée au revêtement d'une pièce avec un matériau de revêtement et
un système d'acheminement selon la revendication 5.
